# EUROPEAN PATENT SPECIFICATION

(11) **EP 0 594 332 B1**
(45) Date of publication and mention of the grant of the patent: **05.03.1997**
(21) Application number: 93308055.8
(22) Date of filing: 08.10.1993
(51) Int. Cl.: C01F 11/02, C04B 2/06, C09C 1/02, A61K 33/08

(54) **Stabilised lime slurries**
Stabilisierte Kalksuspensionen
Suspensions de chaux stabilisés

(30) Priority: 20.10.1992 US 967302
(43) Date of publication of application: 27.04.1994
(73) Proprietor: ROHM AND HAAS COMPANY, Philadelphia Pennsylvania 19105 (US)
(72) Inventor: Mahar, Robert Crouse, Pennsburg, Pennsylvania 18073 (US)
(74) Representative: Angell, David Whilton

(56) References cited:
- EP-A- 0 061 354
- EP-A- 0 313 483
- DE-A- 3 123 732
- DE-A- 4 302 539
- FR-A- 2 677 351
- US-A- 4 230 610
- US-A- 4 375 526

## Description

This invention relates to stable lime slurries, and more particularly to a method of preparing lime slurries which are less susceptible to forming non-flowable gels or hard-packed sediment upon standing.

Lime, also known as quicklime, calcium oxide or CaO, is used in large quantities as an acid neutralizer, as a cement additive and in bleaching powders. Because of the difficulties associated with the handling of solid materials, it is desirable to be able to ship and store lime as a high solids aqueous slurry. In the presence of water, a portion of the lime will become hydrated to form Ca(OH)₂, also known as slaked lime. Slurries of lime or slaked lime are fairly unstable and form either non-flowable gels or hard-pack sediment upon standing, thereby rendering the slurries difficult to use and potentially damaging to piping, pumps, and other slurry handling mechanical equipment.

EP 467165A discloses sedimentation-stable aqueous suspensions of up to 45 percent by weight of solid mineral particles and 0.5 to 8 percent by weight solid water glass as a stabiliser against sedimentation. The suspensions may also contain 1 to 15 percent by weight based on the mineral particles of thixotropic bentonite and/or polyacrylate. The minerals are lime products, clay minerals, bentonite, pigments, activated charcoal, calcium hydroxide, dolomitic calcium hydroxide or milk of lime.

US 4,450,013 to Hirsch et al, discloses the use of copolymers of acrylic or methacrylic acid and 2-acrylamido-2-methylpropanesulfonic acid as a grinding or dispersing agent for pigments. The pigments include chalk, clay, satin white, titanium dioxide, kaolin and dolomite.

EP-A-0061354 discloses stabilised aqueous slurries of lime containing homopolymers of acrylic or methacrylic acid as dispersants.

EP-A-0313483 discloses stabilised aqueous slurries of lime containing as a wet grinding acid anionic polymers having a molecular weight below 1900.

It is an object of the present invention to provide stabilised slurries of lime or slaked lime. As used hereinafter, and in the appended claims, "lime" refers to both lime (calcium oxide) and slaked lime (calcium hydroxide) which is the hydrated form of calcium oxide.

In a first aspect therefore the present invention provides composition comprising an aqueous slurry containing from 20 to 60 wt% calcium oxide and calcium hydroxide, and from 0.05 to 10 wt% based on the weight of total calcium oxide and hydroxide, of one or more of the following polymeric dispersants:
sodium salt of a copolymer of 95 percent by weight acrylic acid and 5 percent by weight ethyl acrylate having M_{w} 2,800 made using sodium metabisulfite as a chain transfer agent;
sodium salt of a copolymer of 70 percent by weight acrylic acid and 30 percent by weight methylacrylic acid having M_{w} 3,500 made using sodium metabisulfite as a chain transfer agent;
sodium salt of a copolymer of 90 percent by weight acrylic acid and 10 percent by weight ethyl acrylate having M_{w} 2,030 made using sodium metabisulfite as a chain transfer agent;
sodium salt of a copolymer of 93 percent by weight acrylic acid and 7 percent by weight butyl acrylate having M_{w} 3,200 made using sodium metabisulfite as a chain transfer agent, wherein all M_{w} values are measured by aqueous gel permeation chromotography.

In a further aspect the invention provides a method of preparing a stabilised aqueous slurry containing from 20 to 60 wt% calcium oxide and calcium hydroxide, comprising incorporating therewith from 0.05 to 10 wt%, based on the weight of total calcium oxide and hydroxide, of one or more of the following polymeric dispersants:
sodium salt of a copolymer of 95 percent by weight acrylic acid and 5 percent by weight ethyl acrylate having M_{w} 2,800 made using sodium metabisulfite as a chain transfer agent;
sodium salt of a copolymer of 70 percent by weight acrylic acid and 30 percent by weight methylacrylic acid having M_{w} 3,500 made using sodium metabisulfite as a chain transfer agent;
sodium salt of a copolymer of 90 percent by weight acrylic acid and 10 percent by weight ethyl acrylate having M_{w} 2,030 made using sodium metabisulfite as a chain transfer agent;
sodium salt of a copolymer of 93 percent by weight acrylic acid and 7 percent by weight butyl acrylate having M_{w} 3,200 made using sodium metabisulfite as a chain transfer agent, wherein all M_{w} values are measured by aqueous gel permeation chromatography.

Anionic polymeric dispersants can be used in their acid forms, or they can be used in a partially or fully neutralized form. The anionic polymeric dispersants can be neutralized with any suitable base, such as alkali metal or ammonium hydroxides. Preferably, the anionic polymeric dispersant is fully neutralized with sodium hydroxide. The polymeric dispersants claimed have weight average molecular weights (M_{w}) of from 2030 to 3500 as measured by aqueous gel permeation chromatography (gpc). Where "M_{w}" appears, it refers to the M_{w} as measured by aqueous gpc.

The method of preparing anionic polymeric dispersants is well known to those skilled in the art. The anionic polymers can be prepared by solvent processes, aqueous processes, or solvent-free processes. The art of preparing anionic polymeric dispersants has also employed various methods of controlling the molecular weight of polymers to produce polymers having M_{w} below about 50,000. These methods include the use of chain transfer agents, metal activators and increased levels of initiators.

The slurries of this invention contain from 20 to 60 percent, and more preferably from 25 to 50 percent by weight of lime. The anionic polymeric dispersant(s) is/are added to the lime slurry to a level of from 0.05 to 10 percent by weight, and preferably from 0.10 to 5 percent by weight based on the weight of lime. It is particularly preferred to add them to the lime slurry to a level which is at or below the minimum viscosity dispersant dosage ("MVDD"). The minimum viscosity dispersant dosage is the level of dispersant beyond which there is no appreciable decrease in slurry viscosity. The actual MVDD may vary depending upon several factors including the type of polymeric dispersant, the type of lime and the solids level of the slurry. The minimum viscosity dispersant dosage for a given slurry can readily be determined by monitoring the viscosity of the slurry as the level of dispersant is increased.

### Determination of MVDD for a 30 Percent By Weight Slurry of Lime

The minimum viscosity dispersant dosage of the sodium salt of a homopolymer of acrylic acid having M_{w} 3,500 made using sodium hypophosphite as a chain transfer agent (Polymer "D") was determined in a 30 percent by weight aqueous slurry of lime in the following manner:
To 490.0 grams of deionized water was added 210.0 grams of Mississippi lime and 1.17 grams of a 42 percent by weight aqueous solution of polymeric dispersant. This mixture was stirred at high speed on a Waring blender for five minutes. The viscosity of the slurry was then measured at 23°C using a Brookfield viscometer, model RVT, spindle #2 at 20 revolutions per minute (rpm). Additional polymeric dispersant was added to the mixture, the mixture was stirred at low speed on a Waring blender for one minute and the viscosity was measured in the same manner as before. The data appear in Table I, below. The polymer level reported in Table I is the weight percent of polymer solids based on the weight of lime.

**TABLE I**

| MVDD of Polymer D in a 30 Percent By Weight Slurry of Lime | |
|---|---|
| Polymer Level | Viscosity (centipoises) |
| 0.1 | 1750 |
| 0.2 | 1390 |
| 0.3 | 1130 |
| 0.4 | 1003 |
| 0.5 | 965 |
| 0.6 | 915 |
| 0.7 | 875 |
| 0.8 | 820 |
| 0.9 | 755 |
| 1.0 | 550 |
| 1.2 | 394 |
| 1.4 | 236 |
| 1.8 | 98 |
| 2.0 | 14 |
| 2.2 | 14 |
| 2.4 | 16 |

The data in Table I show that the MVDD for the 30 percent by weight lime slurry using the polymeric dispersant described above is 2.00 percent by weight based on the weight of lime; at dispersant levels beyond 2.00 percent by weight, no decrease in viscosity was observed.

### Stability Test of Anionic Polymeric Dispersants

The lime slurries appearing in Table II, below, were made in the following way: the anionic polymeric dispersant was added to deionized water and diluted with additional deionized water to 490.0 grams. This mixture was stirred with a spatula until it was completely mixed. Then, 210.0 grams of dried lime was added to the mixture and the mixture was stirred at high speed on a Waring blender for five minutes. The viscosity of the slurry was then measured at 23°C using a Brookfield viscometer, model RVT, spindle #2 at 20 rpm. The polymer level reported in Table II is the weight percent of polymer solids based on the weight of lime. The slurry was then allowed to stand for eight days or thirty-four days at room temperature. Observations of the slurry were then made to determine the extent of syneresis, gelation and settling. The values reported in Table II, below, for syneresis ("Syn"), gellation ("Gel") and settling ("Settle") are height measurements of each of these three phases. The container holding the slurry was then inverted. The percent by weight of the slurry which flowed from the container is reported in Table II as the "Flow" value. The slurry remaining in the container was then gently stirred (1 to 4 revolutions) with a spatula; the percent by weight of the original slurry which flowed from the container is reported in Table II as stability with "Mild" mixing. The slurry was then vigorously stirred (20 or 30 revolutions) with a spatula; the percent by weight of the original slurry which flowed from the container is reported in Table II as stability with "Strong" mixing. The data reported in Table II does not include the weight of the residual slurry coating the surface of the container.

**TABLE II**

| Polymer | | Initial Viscosity | 8 Day Stability | | | | | |
|---|---|---|---|---|---|---|---|---|
| Type | Level | | Syn | Gel | Settle | Flow | Mixing | |
| | | | | | | | Mild | Strong |
| none | 0.0 | 4180 | 0 | 100 | 0 | 12.4 | -- | 87.6 |
| C | 0.2 | 2080 | 2 | 98 | 0 | 93.3 | 6.7 | -- |
| | 0.4 | 810 | 12 | 88 | 0 | 97.1 | 2.9 | -- |
| | 0.6 | 382 | 17 | 84 | 0 | 96.3 | 3.7 | -- |
| F | 0.2 | 1710 | 4 | 96 | 0 | 94.1 | 5.9 | -- |
| | 0.4 | 635 | 15 | 85 | 0 | 95.0 | 5.0 | -- |
| | 0.6 | 432 | 22 | 88 | 0 | 96.9 | 3.1 | -- |
| G | 0.2 | 1740 | 2 | 98 | 0 | 92.0 | 8.0 | -- |
| | 0.4 | 615 | 15 | 85 | 0 | 92.3 | 7.7 | -- |
| | 0.6 | 324 | 20 | 80 | 0 | 92.3 | 7.7 | -- |
| H | 0.2 | 1810 | 3 | 97 | 0 | 85.7 | 14.3 | -- |
| | 0.4 | 790 | 9 | 91 | 0 | 95.5 | 4.5 | -- |
| | 0.6 | 382 | 17 | 83 | 0 | 95.2 | 4.8 | -- |

| Polymer | | Initial Viscosity | 34 Day Stability | | | | | |
|---|---|---|---|---|---|---|---|---|
| Type | Level | | Syn | | | Flow | | |
| none | 0.0 | 2,400 | 1.1 | | | 0 | | |
| F | 0.2 | 1390 | 2.6 | | | 63.4 | | |
| C | 0.2 | 1120 | 2.6 | | | 82.9 | | |
| G | 0.2 | 980 | 3.8 | | | 53.7 | | |
| C - sodium salt of a copolymer of 95 percent by weight acrylic acid and 5 percent by weight ethyl acrylate having M_{w} 2,800 made using sodium metabisulfite as a chain transfer agent F - sodium salt of a copolymer of 70 percent by weight acrylic acid and 30 percent by weight methylacrylic acid having M_{w} 3,500 made using sodium metabisulfite as a chain transfer agent G - sodium salt of a copolymer of 90 percent by weight acrylic acid and 10 percent by weight ethyl acrylate having M_{w} 2,030 made using sodium metabisulfite as a chain transfer agent H - sodium salt of a copolymer of 93 percent by weight acrylic acid and 7 percent by weight butyl acrylate having M_{w} 3,200 made using sodium metabisulfite as a chain transfer agent | | | | | | | | |

The data in Table II show the stability of the lime slurries prepared with a polymeric anionic dispersant. The lime slurry prepared in the absence of a polymeric anionic dispersant was completely gelled after 8 days and required vigorous agitation before it would flow from the container. The lime slurries prepared with polymeric anionic dispersants were completely flowable after 8 days with only mild agitation, and were substantially flowable after 34 days with only mild agitation.

## Claims

1. Composition comprising an aqueous slurry containing from 20 to 60 wt% calcium oxide and calcium hydroxide, and from 0.05 to 10 wt% based on the weight of total calcium oxide and hydroxide, of one or more of the following polymeric dispersants:
sodium salt of a copolymer of 95 percent by weight acrylic acid and 5 percent by weight ethyl acrylate having M_{w} 2,800, made using sodium metabisulfite as a chain transfer agent;
sodium salt of a copolymer of 70 percent by weight acrylic acid and 30 percent by weight methylacrylic acid having M_{w} 3,500, made using sodium metabisulfite as a chain transfer agent;
sodium salt of a copolymer of 90 percent by weight acrylic acid and 10 percent by weight ethyl acrylate having M_{w} 2,030, made using sodium metabisulfite as a chain transfer agent;
sodium salt of a copolymer of 93 percent by weight acrylic acid and 7 percent by weight butyl acrylate having M_{w} 3,200, made using sodium metabisulfite as a chain transfer agent, wherein all M_{w} values are measured by aqueous gel permeation chromotography.

2. Method of preparing a stabilised aqueous slurry containing from 20 to 60 wt% calcium oxide and calcium hydroxide, comprising incorporating therewith from 0.05 to 10 wt%, based on the weight of total calcium oxide and hydroxide, of one or more of the following polymeric dispersants:
sodium salt of a copolymer of 95 percent by weight acrylic acid and 5 percent by weight ethyl acrylate having M_{w} 2,800, made using sodium metabisulfite as a chain transfer agent;
sodium salt of a copolymer of 70 percent by weight acrylic acid and 30 percent by weight methylacrylic acid having M_{w} 3,500, made using sodium metabisulfite as a chain transfer agent;
sodium salt of a copolymer of 90 percent by weight acrylic acid and 10 percent by weight ethyl acrylate having M_{w} 2,030, made using sodium metabisulfite as a chain transfer agent;
sodium salt of a copolymer of 93 percent by weight acrylic acid and 7 percent by weight butyl acrylate having M_{w} 3,200, made using sodium metabisulfite as a chain transfer agent, wherein all M_{w} values are measured by aqueous gel permeation chromatography.

3. Method according to claim 2 comprising the steps of:
a) forming an aqueous mixture of
i) from 20 to 60 wt% calcium oxide/calcium hydroxide, and
ii) from 0.05 to 10 wt%, based on the weight of total calcium oxide and hydroxide of said polymeric dispersant and
(b) agitating the mixture to suspend the calcium oxide/calcium hydroxide.

4. Method according to claim 2 or 3, wherein the amount of calcium oxide/hydroxide in the slurry is from 25 to 50 wt%, and the amount of polymeric dispersant is from 0.10 to 5 wt%.

5. Composition according to claim 1, wherein the amount of calcium oxide/hydroxide in the slurry is from 25 to 50 wt%, and the amount of polymeric dispersant is from 0.10 to 5 wt%.

6. Composition according to claim 1 or 5, wherein the amount of polymeric dispersant in the slurry is at or below the minimum viscosity dispersant dosage ("MVDD").

7. Method according to any of claims 2 to 4, wherein the amount of polymeric dispersant in the slurry is at or below the minimum viscosity dispersant dosage ("MVDD").

## Patentansprüche

1. Zusammensetzung, eine wässerige Suspension umfassend, die zwischen 20 und 60 Gew.-% Kalziumoxid und Kalziumhydroxid und, basierend auf dem Gesamtgewicht an Kalziumoxid und -hydroxid, von 0,05 bis 10 Gew.-% eines oder mehrere der folgenden polymeren Dispersionsmittel enthält:
Natriumsalz eines Copolymers aus 95 Gew.-% Acrylsäure und 5 Gew.-% Ethylacrylat mit einem M_{w} von 2800, hergestellt unter Verwendung von Natriummetabisulfit als Kettenüberträger;
Natriumsalz eines Copolymers aus 70 Gew.-% Acrylsäure und 30 Gew.-% Methacrylsäure mit einem M_{w} von 3500, hergestellt unter Verwendung von Natriummetabisulfit als Kettenüberträger;
Natriumsalz eines Copolymers aus 90 Gew.-% Acrylsäure und 10 Gew.-% Ethylacrylat mit einem M_{w} von 2030, hergestellt unter Verwendung von Natriummetabisulfit als Kettenüberträger;
Natriumsalz eines Copolymers aus 93 Gew.-% Acrylsäure und 7 Gew.-% Butylacrylat mit einem M_{w} von 3200, hergestellt unter Verwendung von Natriummetabisulfit als Kettenüberträger, wobei alle M_{w}-Werte mittels wässeriger Gelpermeationschromatographie bestimmt werden.

2. Verfahren zur Herstellung einer stabilisierten, wässerigen Suspension, die zwischen 20 und 60 Gew.-% Kalziumoxid und Kalziumhydroxid enthält, umfassend das Beimischen von 0,05 bis 10 Gew.-%, basierend auf dem Gesamtgewicht an Kalziumoxid und Kalziumhydroxid, eines oder mehrere der folgenden polymeren Dispersionsmittel:
Natriumsalz eines Copolymers aus 95 Gew.-% Acrylsäure und 5 Gew.-% Ethylacrylat mit einem M_{w} von 2800, hergestellt unter Verwendung von Natriummetabisulfit als Kettenüberträger;
Natriumsalz eines Copolymers aus 70 Gew.-% Acrylsäure und 30 Gew.-% Methacrylsäure mit einem M_{w} von 3500, hergestellt unter Verwendung von Natriummetabisulfit als Kettenüberträger;
Natriumsalz eines Copolymers aus 90 Gew.-% Acrylsäure und 10 Gew.-% Ethylacrylat mit einem M_{w} von 2030, hergestellt unter Verwendung von Natriummetabisulfit als Kettenüberträger;
Natriumsalz eines Copolymers aus 93 Gew.-% Acrylsäure und 7 Gew.-% Butylacrylat mit einem M_{w} von 3200, hergestellt unter Verwendung von Natriummetabisulfit als Kettenüberträger, wobei alle M_{w}-Werte mittels wässeriger Gelpermeationschromatographie bestimmt werden.

3. Verfahren gemäß Anspruch 2, umfassend die Schritte:
a) Bilden einer wässerigen Mischung aus
i) 20 bis 60 Gew.-% Kalziumoxid/ Kalziumhydroxid, und
ii) 0,05 bis 10 Gew.-%, basierend auf dem Gesamtgewicht an Kalziumoxid und -hydroxid, dieser polymeren Dispersionsmittel und
b) Verühren der Mischung, um Kalziumoxid/ Kalziumhydroxid zu suspendieren.

4. Verfahren gemäß Anspruch 2 oder 3, bei dem der Anteil an Kalziumoxid/ Hydroxid in der Suspension von 25 bis 50 Gew.-% und der Anteil an polymeren Dispersionsmitteln von 0,10 bis 5 Gew.-% ist.

5. Zusammensetzung gemäß Anspruch 1, bei der der Anteil an Kalziumoxid/ Hydroxid in der Suspension von 25 bis 50 Gew.-% und der Anteil an polymeren Dispersionsmitteln von 0,10 bis 5 Gew.-% ist.

6. Zusammensetzung gemäß Anspruch 1 oder 5, bei der der Anteil an polymeren Dispersionsmitteln in der Suspension bei oder unter der niedrigsten Viskositäts-Dispersionsmitteldosis ("MVDD") liegt.

7. Verfahren nach irgendeinem der Ansprüche 2 bis 4, bei dem der Anteil an polymeren Dispersionsmitteln in der Suspension bei oder unter der niedrigsten Viskositäts-Dispersionsmitteldosis ("MVDD") liegt.

## Revendications

1. Composition comprenant une bouillie aqueuse contenant de 20 à 60% en poids d'oxyde de calcium et d'hydroxyde de calcium, et de 0,05 à 10% en poids, sur la base du poids du total de l'oxyde et de l'hydroxyde de calcium, d'un ou plusieurs des dispersants polymères suivants:
Sel de sodium d'un copolymère de 95% en poids d'acide acrylique et de 5% en poids d'acrylate d'éthyle ayant un PM de 2800, prépare en utilisant du métabisulfite de sodium comme agent de transfert de chaîne;
sel de sodium d'un copolymère de 70% en poids d'acide acrylique et de 30% en poids d'acide méthacrylique ayant un PM de 3500, préparé en utilisant du métabisulfite de sodium comme agent de transfert de chaîne;
sel de sodium d'un copolymère de 90% en poids d'acide acrylique et de 10% en poids d'acrylate d'éthyle ayant un PM de 2030, préparé en utilisant du métabîsulfite de sodium comme agent de transfert de chaîne;
sel de sodium d'un copolymère de 93% en poids d'acide acrylique et de 7% en poids d'acrylate de butyle ayant un PM de 3200, préparé en utilisant du métabisulfite de sodium comme agent de transfert de chaîne, toutes les valeurs de poids moléculaire (PM) étant mesurées par chromatographie de perméation sur gel aqueux.

2. Procédé de préparation d'une bouillie aqueuse stabilisée contenant de 20 à 60% en poids d'oxyde de calcium et d'hydroxyde de calcium, dans lequel on incorpore avec eux de 0,05 à 10% en poids, sur la base du poids total d'oxyde et d'hydroxyde de calcium, d'un ou plusieurs des dispersants polymères suivants:
Sel de sodium d'un copolymère de 95% en poids d'acide acrylique et de 5% en poids d'acrylate d'éthyle ayant un PM de 2800, préparé en utilisant du métabisulfite de sodium comme agent de transfert de chaîne;
sel de sodium d'un copolymère de 70% en poids d'acide acrylique et de 30% en poids d'acide méthacrylique ayant un PM de 3500, préparé en utilisant du métabisulfite de sodium comme agent de transfert de chaîne;
sel de sodium d'un copolymère de 90% en poids d'acide acrylique et de 10% en poids d'acrylate d'éthyle ayant un PM de 2030, préparé en utilisant du métabisulfite de sodium comme agent de transfert de chaîne;
sel de sodium d'un copolymère de 93% en poids d'acide acrylique et de 7% en poids d'acrylate de butyle ayant un PM de 3200, préparé en utilisant du métabisulfite de sodium comme agent de transfert de chaîne, toutes les valeurs de PM étant mesurées par chromatographie de perméation sur gel aqueux.

3. Procédé selon la revendication 2, comprenant les étapes de :
a) formation d'un mélange aqueux de:
i) 20 à 60% en poids d'oxyde de calcium/hydroxyde de calcium, et
ii) 0,05 à 10% en poids, sur la base du poids du total d'oxyde et d'hydroxyde de calcium, dudit dispersant polymère et
b) agitation du mélange pour mettre en suspension l'oxyde de calcium/hydroxyde de calcium.

4. Procédé selon la revendication 2 ou 3, dans lequel la quantité d'oxyde/hydroxyde de calcium dans la bouillie est de 25 à 50% en poids, et la quantité de dispersant polymère est de 0,10 à 5% en poids.

5. Composition selon la revendication 1, dans laquelle la quantité d'oxyde de calcium/hydroxyde de calcium dans la bouillie est de 25 à 50% en poids, et la quantité de dispersant polymère est de 0,10 à 5% en poids.

6. Composition selon la revendication 1 ou 5, dans laquelle la quantité de dispersant polymère dans la bouillie est égale ou inférieure à la dose de dispersant à viscosité minimum ("DDVM").

7. Procédé selon l'une quelconque des revendications 2 à 4, dans lequel la quantité de dispersant polymère dans la bouillie est égale ou inférieure à la dose de dispersant à viscosité minimum ("DDVM").
